# EUROPEAN PATENT SPECIFICATION

(11) **EP 3 282 112 B1**
(45) Date of publication and mention of the grant of the patent: **27.01.2021**
(21) Application number: 16183838.8
(22) Date of filing: 11.08.2016
(51) Int. Cl.: F02D 41/00, F02D 17/02, F02D 19/02, F02D 35/02, F02D 19/06, F02D 19/10, F02D 41/14

(54) **ENGINE CONTROL FOR OPERATIONS WITH DEACTIVATED CYLINDERS**
MOTORSTEUERUNG FÜR VORGÄNGE MIT DEAKTIVIERTEN ZYLINDERN
COMMANDE DE MOTEUR POUR LES OPÉRATIONS À CYLINDRES DÉSACTIVÉS

(43) Date of publication of application: 14.02.2018
(73) Proprietor: Caterpillar Motoren GmbH & Co. KG, 24159 Kiel (DE)
(72) Inventor: SIXEL, Eike Joachim, 24109 Kiel (DE); CHAKRABARTY, Aradhita Subirkumar, Peterborough, PE1 4BD (GB); SCHMIDT, Andre, 18147 Rostock (DE); WESTER, Daniel, 24242 Felde (DE); MARSCHEIDER, Hannes, 24790 Schülldorf (DE)
(74) Representative: BRP Renaud & Partner mbB Rechtsanwälte Patentanwälte Steuerberater

(56) References cited:
- US-A- 5 553 575
- US-A1- 2013 298 869
- US-A1- 2016 146 140

## Description

### Technical Field

The present disclosure generally relates to a method for operating an internal combustion engine. More particularly, the present disclosure relates to a method for operating an internal combustion engine configured to selectively activate and deactivate cylinder units.

### Background

Generally, the combustion of a mixture of fuel and air in a cylinder of an Otto engine is characterized by a so-called Lambda value describing an air/fuel equivalence ratio, i.e., the ratio of the amount of air in the cylinder relative to the amount of air required for stoichiometric combustion.

In large gaseous fuel combustion engines, Lambda is significantly greater than 1, for example, greater than 2. Gaseous fuel combustion engines may comprise, for example, gaseous fuel engines where a mixture of air and fuel is spark ignited or ignited using a pilot injection of liquid fuel such as diesel. Similarly, another gaseous fuel combustion engine may be a dual fuel engine operable in a liquid fuel mode and a gaseous fuel mode.

Large internal combustion engines may be configured to deactivate cylinders so that the engine runs on a reduced number of cylinders only.

For example, US 8,025,043 B2 discloses a controller for an internal combustion engine. The controller performs a cylinder deactivation operation for improving the fuel economy.

US 2013/0298869 A1 discloses a method for operating an internal combustion engine, according to which method the amount of fuel supplied to each of at least two cylinders is controlled or regulated for the individual cylinders with the aid of a fuel metering device and a cylinder pressure sensor in accordance with a desired performance and/or a desired torque and/or a desired speed of the internal combustion engine.

US 5,553,575 A discloses a lambda control by skip fire of unthrottled gas fueled engines.

US 2016/0146140 A1 discloses an operation of a quantity-controlled internal combustion engine having cylinder deactivation.

The present disclosure is directed, at least in part, to improving or overcoming one or more aspects of prior systems.

### Summary of the Disclosure

In one aspect, the present disclosure relates to a method for operating a gaseous fuel internal combustion engine comprising a plurality of cylinder units. The method comprises the features of claim 1.

In another aspect, the present disclosure relates to a control system for an internal combustion engine being configured to selectively activate and deactivate cylinder units. The control system comprises the features of claim 11.

In yet another aspect, the present disclosure relates to a computer program as defined in claim 12.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic view of an exemplary gaseous fuel internal combustion engine according to the present disclosure;
Fig. 2 is a schematic view of a control system of the internal combustion engine of Fig. 1 according to the present disclosure; and
Fig. 3 is an exemplary control method according to the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a decision on activation and deactivation of cylinder units may be directly based on in-cylinder pressure values of at least one activated cylinder unit. Those in-cylinder pressure values are indicative of engine loads. Accordingly, it may be not required to elaborately determine engine loads for deciding on an activation and deactivation of cylinder units. As a result, the system is more responsive.

The present disclosure is further based in part on the realization that activation and deactivation thresholds for a large internal combustion engine have to be specifically set to account for the unique operation conditions of those large internal combustion engines. Additionally, the activation and deactivation thresholds may be variable. Typically, large internal combustion engines have a rated power output of more than 80 kW per (activated) cylinder and run without experiencing a lot of load changes in continuous operation, for example, on marine vessels or as drive sources of stationary power plants.

The present disclosure is further based in part on the realization that a control over a combustion in internal combustion engines being able to selectively activate and deactivate cylinder units can be optimized in terms of an adjusted intake air mass flow considering the number of activated cylinder units.

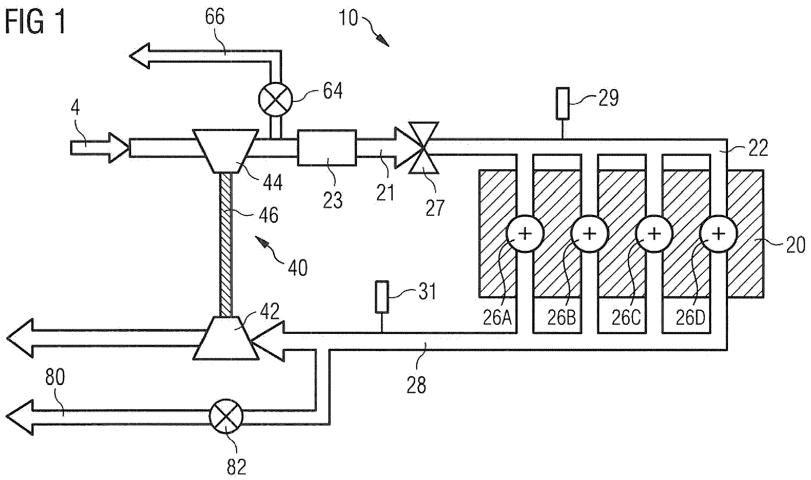

Referring now to the drawings, an exemplary embodiment of an internal combustion engine 10 is illustrated in Fig. 1. The internal combustion engine 10 may include features not shown, such as fuel systems, air systems, cooling systems, peripheries, drive train components, etc. For the purposes of the present disclosure, the internal combustion engine 10 is a gaseous fuel internal combustion engine. Said gaseous fuel internal combustion engine may be any type of internal combustion engine, for example, a dual fuel engine or any other Otto engine that utilizes, at least temporarily, a mixture of gaseous fuel and air for combustion.

The internal combustion engine 10 may be of any size, with any number of cylinders and in any configuration ("V", "in-line", etc.). The internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, the internal combustion engine 10 comprises an engine block 20 including a bank of cylinder units 26A-26D, at least one fuel tank (not shown), a turbocharger 40 associated with the cylinder units 26A-26D, and an intake manifold 22.

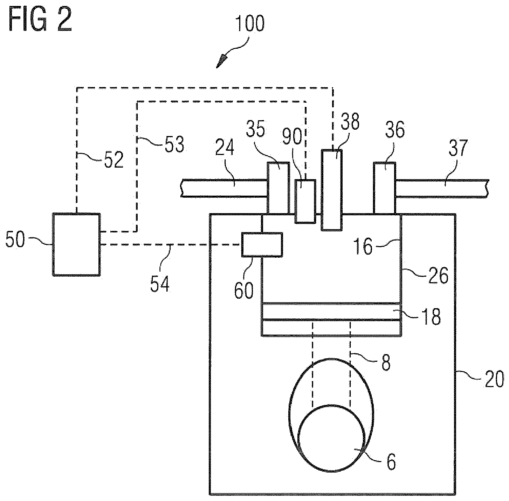

The engine block 20 includes a crank-case (not shown) within which a crankshaft 6 (see Fig. 2) is rotably supported. The crankshaft 6 is connected to pistons 18 (see Fig. 2) that are movable within each of the cylinders 26A-26D during operation of the internal combustion engine 10.

The intake manifold 22 is at least temporarily fluidly connected to each of the cylinders 26A-26D. Each of the cylinders 26A-26D is provided with at least one inlet valve 35 (see Fig. 2) that is adapted to open or close a fluid connection between an intake port 24 and a corresponding combustion chamber 16 of the cylinders 26A-26D.

An exhaust manifold 28 is connected to each of the cylinders 26A-26D. Each of the cylinders 26A-26D is provided with at least one exhaust valve 36 disposed in an exhaust passage 37 (see Fig. 2) and being configured to open and close a fluid connection between the combustion chamber 16 of each cylinder unit 26A-26D and the exhaust manifold 28.

Generally, when the internal combustion engine 10 is operated, a mixture of gaseous fuel and air (in the following referred to as the "mixture") is introduced into the combustion chambers of the plurality of cylinder units 26A-26D via an air inlet 4, the intake manifold 22 and the inlet valves 35, which supply compressed intake air, and gaseous fuel admission valves 38 (see Fig. 2), which supply gaseous fuel. After combustion, exhaust gases generated by the combustion process are released from the cylinder units 26A-26D through the exhaust manifold 28.

In some embodiments, the gaseous fuel may be mixed with the intake air upstream of the cylinder units 26. For example, a gas mixer may be provided upstream of the intake manifold, or cylinder-specific gaseous fuel admission valves similar to gaseous fuel admission valves 38 may be provided in each intake port 24 to supply gaseous fuel.

An intake manifold pressure sensor 29 may be disposed in intake manifold 22 to detect an intake manifold pressure (IMAP) of the intake air or the mixture of intake air and gaseous fuel. The intake manifold pressure sensor 29 is configured to generate a signal indicative of a pressure. Alternatively, the sensor 29 may be configured as an air intake mass flow sensor generating signals indicative of a measured intake air mass flow.

An exhaust manifold pressure sensor 31 may be disposed in the exhaust manifold 28 to detect an exhaust manifold pressure of the exhaust in the exhaust manifold 28. The exhaust manifold pressure sensor 31 is configured to generate a signal indicative of a pressure. Alternatively, the sensor 31 may be configured as an exhaust mass flow sensor generating signals indicative of a measured exhaust mass flow.

The turbocharger 40 is configured to use the heat and pressure of the exhaust gas of the internal combustion engine 10 to drive a compressor 44 for compressing the intake air prior to being supplied to the cylinder units 26A-26D. Specifically, exhaust gas passing a turbine 42 of the turbocharger 40 rotates the turbine 42, thereby decreasing in pressure and temperature. The compressor 44 is rotably connected to the turbine 42 via a common shaft 46 and driven by the turbine 42.

An outlet of the compressor 44 is fluidly connected to an inlet of the intake manifold 22 via a compressor connection 21. As shown in Fig. 1, an outlet of the compressor 44 may be connected to the inlet of the intake manifold 22 via a cooler 23. A throttle valve 27 arranged downstream of the cooler 23 is configured to open or close the fluid connection between the compressor connection 21 and the intake manifold 22, thereby enabling or restricting a flow of the compressed intake air from the compressor connection 21 into the intake manifold 22.

During operation of the internal combustion engine 10, the intake air is compressed and cooled before being supplied to the cylinders 26A-26D. Within the cylinders 26A-26D, further compression and heating of the mixture may be caused by movement of the pistons 18 (see Fig. 2). Then, the mixture within the cylinders 26A-26D may be ignited, for example, by using a spark plug or a pilot injection of liquid fuel to initiate the combustion of the mixture at a predetermined ignition timing. The produced exhaust gas is discharged via the exhaust manifold 28. An outlet of exhaust manifold 28 is fluidly connected to an inlet of the turbine 42. An outlet of the turbine 42 may be fluidly connected to, for example, an exhaust gas treatment system (not shown).

Additionally, as indicated in Fig. 1, the internal combustion engine 10 may be provided with a waste gate system for bypassing the turbine 42. The waste gate system includes a waste gate connection 80 and a waste gate valve 82. Additionally, the internal combustion engine 10 may include a blow-off system for discharging intake air downstream of the compressor 44 to reduce an intake air pressure. The blow-off system includes a blow-off connection 66 and a blow-off valve 64. It should be appreciated that the blow-off connection 66 and the blow-off valve 64 may be provided with different configurations than the one shown in Fig. 1, if appropriate. Alternatively, one or more of these components may be omitted.

Turning now to Fig. 2, an exemplary embodiment of a control system 100 for operating the gaseous fuel engine 10 is illustrated. The person skilled in the art will recognize that the exemplary cylinder unit 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of the cylinder unit 26. The cylinder unit 26 defines the combustion chamber 16 and includes the piston 18. The crankshaft 6 is connected to the piston 18 via the piston rod 8. The piston 18 is configured to reciprocate within the cylinder unit 26.

The cylinder unit 26 is connected to the intake manifold 22 (Fig. 1) via the intake passage 24 and to the exhaust manifold 28 via the exhaust passage 37. The inlet valve 35 is disposed in the intake passage 24, and the exhaust valve 36 is disposed in the exhaust passage 37. The gaseous fuel admission valve 38 is provided to supply gaseous fuel to the combustion chamber 16 of the cylinder unit 26. In the exemplary embodiment, the gaseous fuel admission valve 38 may be a solenoid-operated gas admission valve (SOGAV).

The inlet valve 35 is configured to supply compressed intake air to the combustion chamber 16. The exhaust valve 36 is configured to discharge exhaust from the combustion chamber 16 to the exhaust manifold 28 after combustion.

An ignition device 90 is configured to ignite the mixture of gaseous fuel and air inside the combustion chamber 16 at a desired ignition timing. In some embodiments, the ignition device 90 may be a spark plug. In other exemplary embodiments, the ignition device 90 may be a pilot injector configured to inject a pilot amount of, for example, diesel fuel to ignite the mixture. Further, in some exemplary embodiments, a pre-combustion chamber (not shown) may be provided upstream of the combustion chamber 16, and the ignition device 90 may be configured to ignite a small amount of gaseous fuel supplied to the pre-combustion chamber in order to initiate combustion of gaseous fuel and air in the (main) combustion chamber 16.

A control system 100 includes a sensor 60 associated with the cylinder unit 26. In some embodiments, the sensor 60 may be disposed at least in part within the combustion chamber 16. In other exemplary embodiments, the sensor 60 may be disposed outside of the combustion chamber 16. The sensor 60 is configured to detect an operation characteristic of internal combustion engine 10 indicative of or associated with an engine load of the internal combustion engine 10. In some embodiments, the sensor 60 may be a pressure sensor configured to detect a cylinder pressure in the combustion chamber 16. The sensor 60 may be any known pressure sensor and may be configured to detect the pressure within combustion chamber 16 in a known manner. In other embodiments, sensor 60 may be configured to detect other characteristics from which a current load amount of the cylinder unit 26 and/or the internal combustion engine 10 can be determined.

The control system 100 further includes a control unit 50. The control unit 50 is connected to the gaseous fuel admission valve 38 via a communication line 52. The control unit 50 is configured to control opening and closing of the gaseous fuel admission valve 38. The control unit 50 is further connected to the ignition device 90 via a communication line 53 to control an ignition timing of the mixture in the combustion chamber 16 via the ignition device 90. The control unit 50 is further connected to the sensor 60 to receive a signal indicative of or associated with an engine load of the internal combustion engine 10, for example, a pressure of the cylinder unit 26.

Additionally, the control unit 50 is configured to activate and deactivate one or more cylinder units 26 during operation of the internal combustion engine 10. For example, deactivation of one cylinder unit 26 may include operating the respective gaseous fuel admission valve 38 to stop supplying gaseous fuel to the respective combustion chamber 16, and/or operating the respective ignition device 90 to prevent an ignition. Similarly, activation of one cylinder unit 26 may include allowing the respective gaseous fuel admission valve 38 to supply gaseous fuel, and/or allowing the respective ignition device 90 to ignite the mixture.

Further, the control unit 50 is connected to the waste gate valve 82 and/or the blow-off valve 64 (see Fig. 1) for controlling operation thereof. Additionally, the control unit 50 is configured to receive signals from the intake manifold pressure sensor 29 and from the exhaust manifold pressure sensor 31 (see Fig. 1). The control unit 50 is further configured to determine a (gaseous) fuel mass flow through an opened gaseous fuel admission valve 38, for example by analyzing an opening duration of the gaseous fuel admission 38.

The control unit 50 may be a single microprocessor or dual microprocessors that include means for controlling, among others, an operation of various components of the internal combustion engine 10. The control unit 50 may be a general engine control unit (ECU) capable of controlling the internal combustion engine 10 and/or its associated components. The control unit 50 may include all components required to run an application such as, for example, a memory, a secondary storage device, and a processor such as a central processing unit or any other means known in the art for controlling the internal combustion engine 10 and its components. Various other known circuits may be associated with the control unit 50, including power supply circuitry, signal conditioning circuitry, communication circuitry and other appropriate circuitry. The control unit 50 may analyze and compare received and stored data and, based on instructions and data stored in memory or input by a user, determine whether action is required. For example, the control unit 50 may compare received values with the target values stored in memory, and, based on the results of the comparison, transmit signals to one or more components to alter the operation status of the same.

The control unit 50 may include any memory device known in the art for storing data relating to an operation of the internal combustion engine 10 and its components. The data may be stored in the form of one or more maps. Each of the maps may be in the form of tables, graphs and/or equations, and may include a compilation of data collected from lab and/or field operation of the internal combustion engine 10. The maps may be generated by performing instrumented tests on the operation of the internal combustion engine 10 under various operating conditions while varying parameters associated therewith or performing various measurements. The control unit 50 may reference these maps and control operation of one component in response to the desired operation of another component. For example, the maps may contain data on the required opening duration of the gaseous fuel admission valve 38 for dosing a particular amount of gaseous fuel into the combustion chamber 16.

The control unit 50 is further configured to perform the control methods as disclosed herein, in particular, the control method as described in the following with respect to Figs. 1-3.

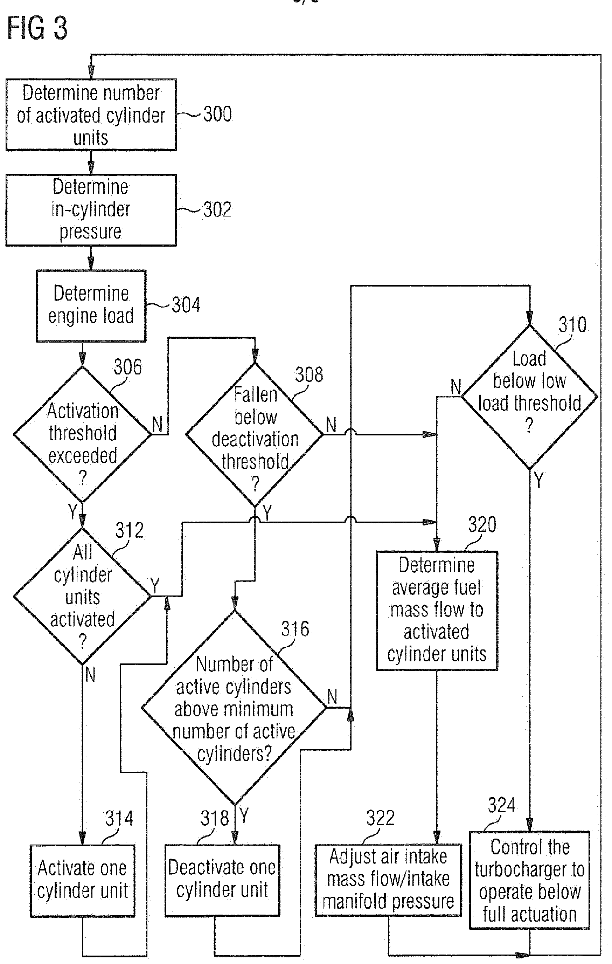

Fig. 3 shows an exemplary method for operating the internal combustion engine 10. It is noted that the exemplary method includes optional method steps, and may be carried out in a different sequence. As one skilled in the art will appreciate, the method is simplified for the purpose of the present disclosure.

The method includes determining (detecting) a number of activated cylinder units of the plurality of activated cylinder units 26A-26D (step 300). Activated cylinder units are those cylinder units, which output power during the power stroke, i.e. in which a combustion occurs during the power stroke. The number of activated cylinder units may be also indirectly determined by determining a number of deactivated cylinder units (cylinder units with skip firing).

The method further includes determining a current in-cylinder pressure value of at least one activated cylinder unit of the plurality of cylinder units 26A-26D at step 302. The in-cylinder pressure value may be determined based on one or more signals received from one or more sensors 60.

The in-cylinder pressure value may be averaged over a plurality of measured in-cylinder pressure values of a plurality of activated cylinder units 26A-26D and/or of a plurality of in-cylinder pressure values of an individual activated cylinder unit 26A-26D. The in-cylinder pressure value may be measured during a specific timing or period of one or more strokes of a combustion cycle. Particularly, the in-cylinder pressure value may be measured during a power stroke. For example, the in-cylinder pressure value may be an indicated mean effective pressure (IMEP), a peak cylinder pressure, or any other pressure value suitable for indicating a load.

In an example not part of the present invention an engine load may be determined based on the determined in-cylinder pressure value (step 304), and/or based on other operational characteristics of the internal combustion engine. In an example not part of the present invention, the determined engine load may be further used for decisions 306 - 310. In the present invention, in decisions 306 - 310, the determined in-cylinder pressure value of step 302 is directly compared to respective thresholds, wherein the determined in-cylinder pressure values are indicative of specific engine loads.

The determined current engine load and/or the determined in-cylinder pressure value is/are compared to an activation threshold (decision 306), for example stored in the memory of the control unit 50. In case the current engine load determined in step 304 and/or the in-cylinder pressure value determined in step 302 is above the activation threshold, the control unit 50 activates a further cylinder unit of the plurality of cylinder units 26A-26D (step 314) if not all cylinder units 26A-26D are currently activated (decision 312). It is noted that determined engine loads (step 304) may be directly compared to threshold loads in decision 306, and/or determined in-cylinder pressure values (step 302) may be compared to pressure thresholds, wherein the determined in-cylinder pressure values are indicative of a specific engine load. In other words, a deactivated cylinder unit of the plurality of the cylinder units 26A-26D is activated if the determined in-cylinder pressure value (step 302) indicates an engine load above an activation threshold, wherein, in an example not part of the present invention, the engine load is directly determined from the determined in-cylinder pressure value (step 304).

For example, the activation threshold may be within a range between about 10 % and about 60 %, particularly between about 20 % and about 40 %, of a maximum rated load of a large gaseous fuel internal combustion engine. Particularly, the activation load threshold may be about 35 % of the maximum rated load. After activating one of the cylinder units 26A - 26D, the method proceeds to step 320. Similarly, the method proceeds also to step 320 if all cylinder units 26A-26D are already activated (decision 312).

In case the determined current engine load is not above the activation load threshold (decision 306), the method continues to a decision 308. Here, the current engine load determined in step 304 and/or the in-cylinder pressure value determined in step 302 are compared to a deactivation threshold similar to decision 306. Again, the deactivation threshold may be stored in the memory of the control unit 50. If the engine load determined in step 304 or indicated by the in-cylinder pressure value determined in step 302 is below the deactivation threshold (decision 308), and a number of currently active cylinder units 26A-26D is above a preset minimum number of active cylinder units 26A-26D (decision 316), the control unit 50 deactivates one of the cylinder units 26A-26D (step 318). The preset minimum number of active cylinder units 26A-26D is selected to ensure proper operation of the internal combustion engine 10 even in very low load operations. The preset minimum number depends on, for example, a configuration and an environment of the internal combustion engine 10. For example, the preset minimum number may be 1 or 2 or more. After deactivating an activated cylinder unit of the cylinder units 26A-26D, the method proceeds to decision 310. Similarly, the method also proceeds to decision 310 if the number of currently activated cylinder units 26A-26D is not above a minimum number of activated cylinder units. On the other hand, the method proceeds to step 320 if the engine load is not below the deactivation load threshold (decision 310).

For example, the deactivation threshold may be within a range between about 1 % and about 40 %, particularly between about 10 % and about 25 %, of a maximum rated load of a large gaseous fuel internal combustion engine. Particularly, the deactivation threshold may be about 15 % of the maximum rated load.

At decision 316 it is determined if the determined or indicated engine load is below a low load threshold to decide how to control combustion of the internal combustion engine 10. The internal combustion engine 10 is either operated according to an IMAP-control (steps 320, 322), which adjusts an air intake mass flow / intake manifold pressure (IMAP) in the intake manifold 22 according to detected or measured operation characteristics of the internal combustion engine 10 if the engine load is above the low load threshold. On the other hand, the internal combustion engine 10 is operated in a low load mode (step 324).

For example, the low load threshold may be within a range between about 5 % and about 40 %, particularly between about 10 % and about 25 %, of a maximum rated load of a large gaseous fuel internal combustion engine. More particularly the low load threshold may be about 20 % of the maximum rated load.

The IMAP-control according to the present disclosure considers the determined number of activated cylinder units 26A-26D (determined/detected in step 300 and updated in step 314 or step 318). Particularly, it was found that in conventional control systems for internal combustion engines being able to selectively activate and deactivate cylinder units, an IMAP-control was performed without considering the number of activated cylinder units. Specifically, an intake manifold pressure was adjusted based on a determined average fuel mass flow to all cylinder units. The deactivated cylinder units having no fuel mass flow will reduce the average fuel mass flow. As a result, for a given desired Lambda value, the required air mass flow calculated based on the determined (too low) average fuel mass flow and the desired Lambda value, is too low. Thus, a too low air mass flow is directed to the combustion chambers 16 of the activated cylinder units 26A-26D resulting in an actual Lambda value being smaller than the desired Lambda value. In other words, the combustion in the activated cylinders was richer than desired in conventional systems when at least one cylinder unit was deactivated.

Accordingly, herein it is suggested to determine the average fuel mass flow for the activated cylinder units only (step 320). Stated differently, the deactivated cylinder units are not considered in this determination. Alternatively, the step 320 may comprise determining any other value correlated with a number of activated cylinder units of the plurality of cylinder units 26A-26D. Particularly, the step 320 may comprise determining any other value correlated with a fuel mass flow to the activated cylinder units of the plurality of cylinder units 26A-26D. However, a person skilled in the art will recognize further control possibilities arising from the finding to consider the number of activated cylinder units 26A-26D when adjusting the air intake mass flow.

The average fuel mass flow may be determined as a sum of determined individual mass flows through the plurality of gaseous fuel admission valves 38 divided by the number of active cylinder units 26A-26D. The number of active cylinder units 26A-26D is calculated by a number of all cylinder units 26A-26D minus a number of deactivated cylinder units 26-26D. For example, the average fuel mass flow and the individual fuel mass flows may be determined by the control unit 50 based on detected or set opening durations of the gaseous fuel admission valves 38 utilizing graphs, tables, equations, etc. The opening durations of the gaseous fuel admission valves 38 may be set based on a load requirement of the internal combustion engine 10. One skilled in the art will appreciate, that other parameters may be also suitable for determining the individual fuel mass flows.

The method proceeds to step 322. Here, the air intake mass flow is adjusted based on the value determined in step 320. Particularly, in step 322, an intake manifold pressure / intake air mass flow is adjusted based on an average fuel mass flow to the activated cylinder units determined in step 320. That is, deactivated cylinder units having no fuel mass flows are not considered and thus do not reduce the determined average fuel mass flow. As a result, for a given preset desired Lambda value, the required air mass flow calculated based on the determined average fuel mass flow and the desired Lambda value, is the right value for obtaining the desired lambda value.

On the other hand, the method proceeds to step 324 if the engine load is below the low load threshold. In case the engine 10 is operated under such low loads, the exhaust pressure and the exhaust mass flow is low. In conventional internal combustion engines this may lead to situations, in which a closed loop control (feedback control) of a turbocharger cannot be performed in a reliable manner.

Herein it is suggested to control the turbocharger 40 to operate below full actuation during low load operations. In other words, the closed loop control (feedback control) as performed during normal load situations is not performed during low load operations. Instead, in low load operations, a preset control strategy is performed. The preset control strategy may include (partially or fully) opening the waste gate valve 82, (partially or fully) opening the blow-off valve 64 is, and/or adjusting the variable turbine geometry, such that the turbocharger 40 is operated in a defined manner, with defined operational states, and below full actuation.

Additionally, during a transition to the low load operation, it may be necessary to stabilize the engine operation by opening the blow-off valve and/or openings of the waste gate valve 82

As shown in Fig. 3, the method steps are continuously repeated in a closed loop during operation of the gaseous fuel internal combustion engine 10.

In some embodiments, the activation threshold, the deactivation threshold and/or the low load threshold may be variable thresholds which are automatically set by the control unit 50 within a predetermined range. For example, the thresholds may depend on an ambient air temperature, an intake air temperature, a position of the blow-off valve, a position of the waste gate valve, and/or a variable turbine geometry lever position. According to the invention, the activation and deactivation thresholds increase with decreasing ambient and intake air temperatures, and the activation and deactivation thresholds decrease with increasing ambient and intake air temperatures.

The present disclosure further relates to a computer program. The computer program comprises computer-executable instructions which, when run on a computer, cause the computer to perform the steps of the methods as disclosed herein.

### Industrial Applicability

The industrial applicability of the systems and methods for operating a gaseous fuel internal combustion engine described herein will be readily appreciated from the foregoing discussion. An exemplary machine suited to the disclosure is a large internal combustion engine such as the engines of the series M46DF, GCM46, GCM34, M32DF, M34DF, M27DF, M3x manufactured by Caterpillar Motoren GmbH & Co. KG, Kiel, Germany. Similarly, the systems and methods described herein can be adapted to a large variety of other internal combustion engines used for various different tasks.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1 % or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A method for operating a gaseous fuel internal combustion engine (10) comprising a plurality of cylinder units (26A-26D), the gaseous fuel internal combustion engine (10) being configured to selectively activate and deactivate the cylinder units (26A-26D), the method comprising:
determining (step 302) an in-cylinder pressure value of at least one activated cylinder unit (26A-26D), the in-cylinder pressure value being an in-cylinder pressure value of an individual activated cylinder unit or an average in-cylinder pressure value of a plurality of activated cylinder units; and
setting (steps 314, 318) a number of activated cylinder units (26A-26D) directly based on the determined in-cylinder pressure value, comprising
activating (step 314) a deactivated cylinder unit of the plurality of the cylinder units (26A-26D) if the determined in-cylinder pressure value is above an activation threshold, and
deactivating (step 318) an activated cylinder unit of the plurality of cylinder units (26A-26D) if the determined in-cylinder pressure value is below a deactivation threshold,
wherein the activation threshold and the deactivation threshold are variable and depend on at least one of an ambient temperature and an intake air temperature.

2. The method of claim 1, wherein the method steps are continuously repeated in a closed loop during operation of the gaseous fuel internal combustion engine (10).

3. The method of claim 1, wherein the activation threshold is within a range between about 10 % and about 60 % of a maximum rated load of the internal combustion engine (10).

4. The method of claim 1 or 3, wherein the deactivation threshold is within a range between about 1 % and about 40 % of a maximum rated load of the internal combustion engine (10).

5. The method of any one of the preceding claims, wherein an average in-cylinder pressure value of a plurality of in-cylinder pressure values of the individual activated cylinder unit (26A-26D) is determined as the in-cylinder pressure value of the individual activated cylinder unit.

6. The method of any one of the preceding claims, further comprising:
determining (step 300) a number of activated cylinder units of the plurality of cylinder units (26A-26D); and
adjusting (step 322) an intake air mass flow based on the determined number of activated cylinder units (26A-26D).

7. The method of claim 6, further comprising:
determining (320) a fuel mass flow to the activated cylinder units (26A-26D); and
the method step of adjusting the intake air mass flow is further based on the determined fuel mass flow.

8. The method of claim 7, wherein
the method step of determining the fuel mass flow comprises determining an average fuel mass flow to the activated cylinder units (26A-26D); and
the method step of adjusting the intake air mass flow is further based on the determined average fuel mass flow.

9. The method of any one of the preceding claims, further comprising:
controlling (step 324) a turbocharger (40) of the gaseous fuel internal combustion engine (10) to operate below a full actuation if the determined in-cylinder pressure value is below a low load threshold.

10. The method of claim 9, wherein the low load threshold is within a range between about 5 % and about 40 % of a maximum rated load of the internal combustion engine (10).

11. A control system (100) for an internal combustion engine (10) being configured to selectively activate and deactivate cylinder units (26A-26D), the control system (100) comprising a control unit (50) configured to perform the steps of the method of any one of claims 1 to 10.

12. A computer program comprising computer-executable instructions which, when run on the control system of claim 11, cause the control system to perform the steps of the method of any one of claims 1 to 10.

## Patentansprüche

1. Verfahren zum Betreiben einer mit einem gasförmigen Brennstoff betriebenen Brennkraftmaschine (10), die eine Vielzahl von Zylindereinheiten (26A-26D) umfasst, wobei die mit einem gasförmigen Brennstoff betriebene Brennkraftmaschine (10) zum selektiven Aktivieren und Deaktivieren der Zylindereinheiten (26A-26D) konfiguriert ist, wobei das Verfahren umfasst:
Bestimmen (Schritt 302) eines Zylinderinnendruckwerts von mindestens einer aktivierten Zylindereinheit (26A-26D), wobei der Zylinderinnendruckwert ein Zylinderinnendruckwert einer einzelnen aktivierten Zylindereinheit oder ein durchschnittlicher Zylinderinnendruckwert einer Vielzahl von aktivierten Zylindereinheiten ist; und
Einstellen (Schritte 314, 318) einer Anzahl von aktivierten Zylindereinheiten (26A-26D) direkt basierend auf dem ermittelten Zylinderinnendruckwert, umfassend
Aktivieren (Schritt 314) einer deaktivierten Zylindereinheit der Vielzahl von Zylindereinheiten (26A-26D), wenn der ermittelte Zylinderinnendruckwert über einem Aktivierungsschwellenwert liegt, und
Deaktivieren (Schritt 318) einer aktivierten Zylindereinheit der Vielzahl von Zylindereinheiten (26A-26D), wenn der ermittelte Zylinderinnendruckwert unter einem Deaktivierungsschwellenwert liegt,
wobei der Aktivierungsschwellenwert und der Deaktivierungsschwellenwert variabel sind und von mindestens einer von einer Umgebungstemperatur und einer Ansauglufttemperatur abhängen.

2. Verfahren nach Anspruch 1, wobei die Verfahrensschritte während des Betriebs der mit einem gasförmigen Brennstoff betriebenen Brennkraftmaschine (10) kontinuierlich in einer geschlossenen Schleife wiederholt werden.

3. Verfahren nach Anspruch 1, wobei der Aktivierungsschwellenwert innerhalb eines Bereichs zwischen etwa 10 % und etwa 60 % einer maximalen Nennlast der Brennkraftmaschine (10) liegt.

4. Verfahren nach Anspruch 1 oder 3, wobei der Deaktivierungsschwellenwert innerhalb eines Bereichs zwischen etwa 1 % und etwa 40 % einer maximalen Nennlast der Brennkraftmaschine (10) liegt.

5. Verfahren nach einem der vorstehenden Ansprüche, wobei ein durchschnittlicher Zylinderinnendruckwert einer Vielzahl von Zylinderinnendruckwerten der einzelnen aktivierten Zylindereinheit (26A-26D) als der Zylinderinnendruckwert der einzelnen aktivierten Zylindereinheit ermittelt wird.

6. Verfahren nach einem der vorstehenden Ansprüche, ferner umfassend:
Bestimmen (Schritt 300) einer Anzahl von aktivierten Zylindereinheiten von der Vielzahl von Zylindereinheiten (26A-26D) und
Anpassen (Schritt 322) eines Ansaugluftmassenstroms basierend auf der bestimmten Anzahl von aktivierten Zylindereinheiten (26A-26D).

7. Verfahren nach Anspruch 6, ferner umfassend:
Bestimmen (320) eines Brennstoffmassenstroms zu den aktivierten Zylindereinheiten (26A-26D) und
der Verfahrensschritt des Einstellens des Ansaugluftmassenstroms, der ferner auf dem bestimmten Brennstoffmassenstrom basiert.

8. Verfahren nach Anspruch 7, wobei
der Verfahrensschritt des Bestimmens des Brennstoffmassenstroms das Bestimmen eines durchschnittlichen Brennstoffmassenstroms zu den aktivierten Zylindereinheiten (26A-26D) umfasst und
der Verfahrensschritt des Einstellens des Ansaugluftmassenstroms ferner auf dem bestimmten durchschnittlichen Brennstoffmassenstrom basiert.

9. Verfahren nach einem der vorstehenden Ansprüche, ferner umfassend:
Steuern (Schritt 324) eines Turboladers (40) der mit einem gasförmigen Brennstoff betriebenen Brennkraftmaschine (10), um unter einer vollständigen Betätigung zu arbeiten, wenn der bestimmte Zylinderinnendruckwert unter einem niedrigen Lastschwellenwert liegt.

10. Verfahren nach Anspruch 9, wobei der niedrige Lastschwellenwert innerhalb eines Bereichs zwischen etwa 5 % und etwa 40 % einer maximalen Nennlast der Brennkraftmaschine (10) liegt.

11. Steuersystem (100) für eine Brennkraftmaschine (10), das zum selektiven Aktivieren und Deaktivieren von Zylindereinheiten (26A-26D) konfiguriert ist, wobei das Steuersystem (100) eine Steuereinheit (50) umfasst, die zum Durchführen der Schritte des Verfahrens nach einem der Ansprüche 1 bis 10 konfiguriert ist.

12. Computerprogramm, umfassend computerausführbare Anweisungen, die, wenn sie auf dem Steuersystem nach Anspruch 11 ausgeführt werden, bewirken, dass das Steuersystem die Schritte des Verfahrens nach einem der Ansprüche 1 bis 10 durchführt.

## Revendications

1. Procédé d'actionnement d'un moteur à combustion interne à combustible gazeux (10) comprenant une pluralité d'unités de cylindre (26A-26D), le moteur à combustion interne à combustible gazeux (10) étant configuré pour activer et désactiver sélectivement les unités de cylindre (26A-26D), le procédé comprenant :
la détermination (étape 302) d'une valeur de pression interne du cylindre d'au moins une unité de cylindre activée (26A-26D), la valeur de pression interne du cylindre étant une valeur de pression interne du cylindre d'une unité de cylindre activée individuelle ou une valeur moyenne de pression interne du cylindre d'une pluralité d'unités de cylindre activées ; et
le réglage (étapes 314, 318) d'un certain nombre d'unités de cylindre activées (26A-26D) directement sur la base de la valeur de pression interne du cylindre déterminée, comprenant
l'activation (étape 314) d'une unité de cylindre désactivée de la pluralité des unités de cylindre (26A-26D) si la valeur de pression interne du cylindre déterminée est supérieure à un seuil d'activation, et
la désactivation (étape 318) d'une unité de cylindre activée de la pluralité d'unités de cylindre (26A-26D) si la valeur de pression interne au cylindre déterminée est inférieure à un seuil de désactivation,
dans lequel le seuil d'activation et le seuil de désactivation sont variables et dépendent d'au moins l'une d'une température ambiante et d'une température d'air d'admission.

2. Procédé selon la revendication 1, dans lequel les étapes du procédé sont répétées en continu en boucle fermée pendant le fonctionnement du moteur à combustion interne à combustible gazeux (10).

3. Procédé selon la revendication 1, dans lequel le seuil d'activation est compris dans une plage comprise entre environ 10 % et environ 60 % d'une charge nominale maximale du moteur à combustion interne (10).

4. Procédé selon la revendication 1 ou 3, dans lequel le seuil de désactivation se situe dans une plage comprise entre environ 1 % et environ 40 % d'une charge nominale maximale du moteur à combustion interne (10).

5. Procédé selon l'une quelconque des revendications précédentes, dans lequel la valeur moyenne de pression interne au cylindre d'une pluralité de valeurs de pression interne au cylindre de l'unité de cylindre activée individuelle (26A-26D) est déterminée comme la valeur de pression interne au cylindre de l'unité de cylindre activée individuelle.

6. Procédé selon l'une quelconque des revendications précédentes, comprenant en outre :
la détermination (étape 300) d'un certain nombre d'unités de cylindre activées de la pluralité d'unités de cylindre (26A-26D) ; et
l'ajustement (étape 322) d'un débit massique d'air d'admission sur la base du nombre déterminé d'unités de cylindre activées (26A-26D).

7. Procédé selon la revendication 6, comprenant en outre :
la détermination (320) d'un débit massique de carburant vers les unités de cylindre activées (26A-26D) ; et
l'étape du procédé de réglage du débit massique d'air d'admission est en outre basée sur le débit massique de carburant déterminé.

8. Procédé selon la revendication 7, dans lequel :
l'étape du procédé de détermination du débit massique de carburant comprend la détermination d'un débit massique de carburant moyen vers les unités de cylindre activées (26A-26D) ; et
l'étape du procédé de réglage du débit massique d'air d'admission est en outre basée sur le débit massique de carburant moyen déterminé.

9. Procédé selon l'une quelconque des revendications précédentes, comprenant en outre :
la commande (étape 324) d'un turbocompresseur (40) du moteur à combustion interne à combustible gazeux (10) pour qu'il fonctionne en dessous d'un actionnement complet si la valeur de pression interne au cylindre déterminée est inférieure à un seuil de charge faible.

10. Procédé selon la revendication 9, dans lequel le seuil de charge faible est dans une plage comprise entre environ 5 % et environ 40 % d'une charge nominale maximale du moteur à combustion interne (10).

11. Système de commande (100) pour un moteur à combustion interne (10) configuré pour activer et désactiver sélectivement des unités de cylindre (26A-26D), le système de commande (100) comprenant une unité de commande (50) configurée pour exécuter les étapes du procédé selon l'une quelconque des revendications 1 à 10.

12. Programme informatique comprenant des instructions exécutables par un ordinateur qui, lorsqu'elles sont exécutées sur le système de commande selon la revendication 11, amènent le système de commande à exécuter les étapes du procédé selon l'une quelconque des revendications 1 à 10.
